# EUROPÄISCHE PATENTSCHRIFT

(11) **EP 0 476 318 B1**
(45) Veröffentlichungstag und Bekanntmachung des Hinweises auf die Patenterteilung: **13.07.1994**
(21) Anmeldenummer: 91113794.1
(22) Anmeldetag: 16.08.1991
(51) Int. Cl.: B62H 5/00, E05B 67/00, E05B 71/00

(54) **Spiralkabelschlosseinrichtung an oder zum Anbau an einem Zweiradrahmen**
Locking device with spiral shaped cable for mounting on two-wheel frame
Système de fermeture muni de câble en forme de spiral pour le montage sur un cadre de bicyclette

(30) Priorität: 31.08.1990 DE 9012512 U
(43) Veröffentlichungstag der Anmeldung: 25.03.1992
(73) Patentinhaber: Aug. Winkhaus GmbH & Co. KG, D-48291 Telgte (DE)
(72) Erfinder: Kortenbrede, Ludger, W-4404 Telgte (DE)
(74) Vertreter: Weickmann, Heinrich, Dipl.-Ing.

(56) Entgegenhaltungen:
- EP-A- 0 361 155
- DE-A- 3 018 544
- DE-U- 8 529 526
- DE-U- 8 629 478
- US-A- 4 028 916

## Beschreibung

Die Erfindung betrifft eine Spiralkabelschloßeinrichtung an oder zum Anbau an einem Zweiradrahmen, bei welcher das eine Ende eines Spiralkabels am Zweiradrahmen, insbesondere in einem am Zweiradrahmen fest angebrachten oder anbringbaren Verankerungsstück unverlierbar verankert ist und das andere Ende des Spiralkabels mit einer Schließeinheit ausgeführt ist, welche mit einer am Zweiradrahmen angebrachten oder anbringbaren Gegenschließeinheit verbindbar ist.

Die ständige Verbindung des einen Endes des Spiralkabels mit dem Zweiradrahmen über das Verankerungsstück soll sicherstellen, daß das Spiralkabelschloß bei Benutzung des Zweirades nicht vergessen werden kann und somit immer im Bedarfsfall zur Verfügung steht. Zum Sichern des Zweirads mit dem Spiralkabelschloß wird die Schließeinheit von der Gegenschließeinheit abgenommen, zusammen mit dem Kabel um einen möglichst ortsfesten Gegenstand geschlungen und anschließend wieder mit der Gegenschließeinheit verbunden. Die Schließeinheit ist also sowohl bei Gebrauch als auch bei Nichtgebrauch mit der Gegenschließeinheit und damit unlösbar mit dem Zweiradrahmen verbunden. Darüber hinaus läßt sich ein Diebstahl nach Wiederauffinden des Zweirades kontrollieren, da bei einem Diebstahl zwar das Spiralkabel zerstört wird, jedoch die beiden Enden des Spiralkabels über das Verankerungsstück und über die mit der Gegenschließeinheit verbundene Schließeinheit noch an dem Zweiradrahmen angebracht sind. Wird dagegen das Zweirad gestohlen, ohne daß es mit der Spiralkabelschloßeinrichtung an einem ortfesten Gegenstand festgelegt war, so ist die Spiralkabelschloßeinrichtung nach dem Wiederauffinden des Zweirades unversehrt, so daß unmittelbar erkennbar ist, daß das Zweirad bei dem Diebstahl nicht gesichert war.

Es ist eine Spiralkabelschloßeinrichtung der eingangs genannten Art bekannt, bei der das Verankerungsstück über eine Sattelklemmschraube am Zweiradrahmen angebracht ist. Die als Mutter für die Sattelklemmschraube ausgebildete Gegenschließeinheit besitzt einen zylindrischen Fortsatz, auf welchen die Schließeinheit bei Gebrauch oder Nichtgebrauch aufgeschoben werden kann. Hierbei hintergreift wenigstens ein Verriegelungselement der Schließeinheit eine Hinterdrehung des zylindrischen Fortsatzes, wodurch die Schließeinheit mit der Gegenschließeinheit verriegelt wird. Die durch einen Schlüssel betätigbare Schließeinheit kann sich dabei um den zylindrischen Fortsatz frei drehen, so daß während der Fahrt das Spiralkabel durch Erschütterungen hin und her pendeln kann. Abgesehen von den störenden Geräuschen kann das Spiralkabel auch den Fahrer behindern. Darüber hinaus ragt das Spiralkabel in den für die Mitnahme von Gepäck vorgesehenen Raum, so daß das Mitführen von Gegenständen behindert wird. Außerdem ist diese bekannte Spiralkabelschloßeinrichtung unvorteilhaft, wenn man zum Einführen des Schlüssels nur eine Hand frei hat. Wird der Schlüssel an der Schließeinheit nicht genau fluchtend mit deren Einführkanal angesetzt, kann sich die Schließeinheit, bei dem Versuch den Schlüssel in den Einführkanal einzuschieben, verdrehen.

Aus der DE-PS 33 35 662 ist eine Halterung für ein Fahrrad-Ringschloß, insbesondere ein Kabel- oder Kettenschloß bekannt, die ebenfalls über die Sattelklemmschelle mit dem Zweiradrahmen verbunden ist. Die Halterung besteht im wesentlichen aus einer Ringöse, durch die die zusammensteckbaren Schließteile des Ringschlosses hindurch verbindbar und damit an der Halterung befestigbar sind. Um ein Verdrehen der beiden miteinander verbundenen Schließteile in der Ringöse zu verhindern, hat die Ringöse eine nach innen offene Ausnehmung, in die ein an einem der beiden Schließteile angebrachter Vorsprung eingreift. Dieses bekannte Ringschloß ist von dem Zweiradrahmen vollständig abnehmbar und kann somit leicht vergessen werden. Abgesehen davon, daß zum Verbinden der beiden Schloßteile zwei Hände benötigt werden, ist auch das Zusammenstecken der beiden Schließteile in der Ringöse Verhältnismäßig schwierig, da vor dem entgültigen Verriegeln der beiden Teile in der Ringöse erst das mit dem Vorsprung versehene Schloßteil so gegenüber der Ringöse ausgerichtet werden muß, daß der Vorsprung mit der Ausnehmung fluchtet. Da zum einen der Vorsprung sowie die Ausnehmung relativ klein sind und zum anderen die Halterung unterhalb des Sattels an dem Zweiradrahmen in einem ungünstigen Blickfeld liegt, kann das Zusammenfügen der beiden Schloßteile verhältnismäßig Zeitaufwendig sein. Des weiteren ragt das Spiralkabel auch hier in den für die Mitnahme von Gepäck vorgesehenen Raum, so daß das Mitführen von Gegenständen ebenfalls behindert wird.

Aus dem DE-GM 88 14 794 ist ein Fahrradschloß bekannt, bei dem das eine Ende einer Seilschlaufe fest an einer Seite einer Hinterradgabel des Fahrradrahmens angebracht ist und das andere Ende in einer auf eine Nabenmutter des Hinterrades aufschiebbare Schließeinheit festlegbar ist. Bei Nichtgebrauch wird die Seilschlaufe um das Hinterrad herumgeführt und mittels an der Hinterradgabel angebrachten Halteschellen gehalten. Die schlusselbetatigbare Schließeinheit ist um die Nabenmutter frei drehbar, was das Ansetzen eines Schlüssels erschwert. Darüber hinaus ist die Festlegung der Seilschlaufe bei deren Nichtgebrauch unsicher und bedienungsunfreundlich. Das Einlegen der Seilschlaufe in die Halteschellen kann durch seitliche Hinterradverkleidungen erschwert sein. Schließlich kann sich die Seilschlaufe während der Fahrt durch Erschütterungen aus den Halteschellen lösen und zwischen die Speichen des Hinterrades gelangen.

Aus der US-4,028,916 ist eine Spiralkabelschloß-Einrichtung nach dem Oberbegriff des Anspruchs 1 bekannt. Nachteilig ist, daß die Schließeinheit mit dem daran befestigten Kabelende nach Zusammenstecken mit der Gegenschließeinheit um die Steckrichtung herum drehbar bleibt, so daß das Kabel in seiner Stellung relativ zum Zweiradrahmen nicht eindeutig definiert ist und beim Fahren stört.

Es ist Aufgabe der vorliegenden Erfindung, eine Spiralkabelschloß-Einrichtung der aus der US-4,028,916 bekannten Art zu schaffen, bei der die Schließeinheit beim Verbinden mit der Gegenschließeinheit in ihrer noch weiter definierten Lage gegenüber der Gegenschließeinheit auf einfache Weise festlegbar ist.

Vorstehende Aufgabe wird dadurch gelöst, daß die komplementären Orientierungsmittel derart ausgebildet sind, daß sie eine Relativdrehung von Gegenschließeinheit und Schließeinheit um die Steckrichtung unterdrücken.

Hierdurch läßt sich die Schließeinheit mit der Gegenschließeinheit auf einfache Weise mit einer Hand verbinden bzw. von der Gegenschließeinheit lösen, weil die Schließeinheit bei Betätigung nicht durch Verdrehen ausweichen kann.

Durch die zwangsläufig in Eingriff bringbaren Orientierungsmittel werden die Schließeinheit und die Gegenschließeinheit beim gegenseitigen Verbinden selbstständig zueinander ausgerichtet, wodurch sich die Schließeinheit und die Gegenschließeinheit ohne langwieriges Suchen miteinander in Eingriff bringen und verbinden lassen. Außerdem ist die Schließeinheit während der Fahrt festgelegt, so daß ein hin und her pendeln unterbunden ist, Weiterhin kann die erfindungsgemäße Spiralkabelschloßeinrichtung an einer Stelle des Fahrradrahmens so angebracht werden, daß sie nicht in den Raum für den Transport von Gepäck hineinragt. Durch die zwangsläufige Festlegung der Schließeinheit wird aufgrund ihrer gegenüber der Gegenschließeinheit immer gleichen Lage das Lösen von oder das Verbinden mit dem Gegenschließstück auch bei schlechten Sichtverhältnissen erleichtert, wie sie beispielsweise in einem dunklen Fahrradkeller herrschen. Dabei kann das Verbinden von Schließeinheit und Gegenschließeinheit durch Einweisungsflächen an der Schließeinheit und/oder der Gegenschließeinheit erleichtert werden, wobei diese Einweisungsflächen mit den Orientierungsmitteln identisch sein können. Die Einweisungsflächen gestatten es, daß die Schließeinheit zu Beginn des Verbindungsvorganges in einer zu der richtigen Lage gegenüber der Gegenschließeinheit nur ungefähr angenäherten Stellung an der Gegenschließeinheit angesetzt werden muß und bei einer Fortführung des Verbindungsvorganges die Ausrichtung der Schließeinheit in die richtige Lage durch die Einweisungsflächen bzw. die Orientierungsmittel erfolgt.

Das Lösen der Schließeinheit von der Gegenschließeinheit bzw. das Verbinden wird weiterhin dadurch vereinfacht, daß die Gegenschließeinheit mit den zugehörigen Orientierungsmitteln am Zweiradrahmen unbeweglich angebracht ist. Darüber hinaus wird ein Verrutschen der Gegenschließeinheit selbst bei größeren Erschütterungen unterbunden.

Bevorzugt ist das eine Ende des Spiralkabels am Zweiradrahmen unbeweglich verankert, so daß das Spindelkabel bei Nichtgebrauch stets seine vorgegebene Stellung am Zweiradrahmen einnimmt und nicht verrutschen kann.

Das Spiralkabel kann bereits vor der Verbindung mit dem Verankerungsstück einerseits und der Gegenschließeinheit andererseits eine die Spiralbildung begünstigende Vorspannung aufweisen. Die Ausbildung als Spirale hat zum einen den Vorteil, daß das Kabel bei Nichtgebrauch dicht gepackt am Zweirad mitgeführt werden kann, wodurch eine Behinderung weder des Fahrers noch des mitgeführten Gepäcks vermieden wird. Zum anderen wird die Schließeinheit nach dem Lösen von der Gegenschließeinheit durch die Eigenspannung des Spiralkabels in der Nähe der Gegenschließeinheit gehalten, wodurch sie jederzeit ergriffen werden kann und darüber hinaus nicht zu Boden fallen kann. Um die spiralförmige Ausbildung des Spiralkabels auch bei der an dem Zweirad angebrachten Spiralkabelschloßeinrichtung zu unterstützen, damit sie über einen langen Gebrauchszeitraum hinweg aufrecht erhalten bleibt, wird weiterhin vorgeschlagen, daß die Einläufe der beiden Enden des Spiralkabels in das Verankerungsstück bzw. die Schließeinheit in der durch die komplementären Orientierungsmittel festgelegten Verbindungsstellung von Schließeinheit und Gegenschließeinheit eine die Ausbildung einer Spirale des Spiralkabels begünstigende Relativlage und Relativorientierung einnehmen.

Die die Ausbildung der Spirale begünstigende Relativlage und Relativorientierung kann auf vielfältige Weise erfolgen. Besonders einfach läßt sich dies bewerkstelligen, wenn die Einläufe zueinander parallel sind, wodurch auch ein Knicken des Kabels bei einer Zugbelastung vermieden wird. Hierbei läßt sich die erfindungsgemäße Spiralkabelschloßeinrichtung besonders platzsparend am Zweiradrahmen unterbringen, wenn die Einläufe im wesentlichen parallel zu einem Rahmenrohr sind, an welchem das Verankerungsstück und die Gegenschließeinheit angebracht sind. Besonders vorteilhaft ist es, wenn bei Ausführung des Spiralkabels mit einer eine vorgegebene Spiralwicklung begünstigenden inneren Vorspannung die Einläufe derart parallel zueinander beabstandet sind, daß sie im wesentlichen tangential zu einem durch die innere Vorspannung begünstigten Spiralverlauf liegen.

Die Orientierungsmittel können ganz unterschiedlich ausgebildet sein. So besteht beispielsweise die Möglichkeit, daß an der Schließeinheit und an der Gegenschließeinheit komplementäre teilzylindrische oder teilprismatische Orientierungs- und gegebenenfalls Einweisungsflächen angebracht sind, deren Achsen eine Zusammensteckrichtung der Gegenschließeinheit und der Schließeinheit im wesentlichen senkrecht schneiden. Dabei kann eine Orientierungsfläche der Gegenschließeinheit als Orientierungswanne und die komplementäre Orientierungsfläche der Schließeinheit als eine der Wannenfläche komplementäre Fläche ausgebildet sein, insbesondere als eine zum zugehörigen Schließkabelende achsparallele oder koaxiale Zylinderfläche. Als Orientierungsfläche der Schließeinheit kann deren meist ohnehin zylindrische Gehäuseaußenfläche genutzt werden.

Um Schließeinheit und Gegenschließeinheit auf einfache Weise lösbar miteinander verbinden zu können, kann ein Schließbolzen der Gegenschließeinheit an der Wannensohle sich über diese erhebend und an der Schließeinheit eine entsprechende Schließbolzenaufnahme angebracht sein. Hierdurch kann auf bereits bekannte Verbindungseinrichtungen zurückgegriffen werden.

Alternativ besteht die Möglichkeit, daß an der Gegenschließeinheit und der Schließeinheit komplementäre Orientierungsmittel angebracht sind, welche durch Drehung der Schließeinheit um eine Zusammensteckachse von Gegenschließeinheit und Schließeinheit in Registerstellung bringbar sind, in der die Schließeinheit und die Gegenschließeinheit miteinander koppelbar sind. Dabei können die Orientierungsmittel der Gegenschließeinheit eine zu der Zusammensteckachse zentrischen Wanne und die Orientierungsmittel der Schließeinheit ein um die Zusammensteckachse konzentrisches Wanneneingriffsstück umfassen. An je einer Umfangsfläche der Wanne bzw. des Wanneneingriffsstücks kann eine Paarung einer Orientierungsausnehmung und eines Orientierungsvorsprungs vorgesehen sein.

Die Schließeinheit kann unterschiedliche Schließmechanismen aufweisen. Besonders vorteilhaft ist es, wenn die Schließeinheit von der Gegenschließeinheit durch Schlüsselbetätigung oder Schließgeheimniseinstellung lösbar ist. Durch die zwangsläufige Festlegung der Orientierung der Schließeinheit läßt sich der Schlüssel auf einfache Weise nur mit einer Hand in die Schließeinheit einführen. Aber auch bei einer Schließgeheimniseinstellung ist die zwangsläufige Festlegung der Schließeinheit von Vorteil, da die Bedienungsperson bei Einstellung des Schließgeheimnisses die Schließeinheit nicht festhalten muß.

Der Schließmechanismus kann dabei sowohl in der Schließeinheit als auch in der Gegenschließeinheit vorgesehen werden. Ist der Schließmechanismus in der Schließeinheit untergebracht, so kann eine Schließeinheit verwendet werden, wie sie bei lose mitgeführten Spiralkabelschlössern bekannt ist.

Die erfindungsgemäße Spiralkabelschloßeinrichtung kann bereits bei der Herstellung des Zweirades an dem Rahmen des Zweirades angebracht werden. Hierbei kann eine unlösbare Verbindung zwischen dem Verankerungsstück und/oder der Gegenschließeinheit und dem Zweiradrahmen vorgesehen werden, beispielsweise durch Schweißen oder Löten.

Die erfindungsgemäße Spiralkabelschloßeinrichtung kann auch als Nachrüstsatz für bereits ausgelieferte Zweiräder verwendet werden. Das Verankerungsstück und/oder die Gegenschließeinheit sind dann an dem Zweiradrahmen durch wenigstens eine Befestigungseinrichtung lösbar anbringbar.

Alternativ kann die Spiralkbelschloßeinrichtung auch an bereits ausgelieferte Zweiräder gelötet oder geschweißt werden. Außerdem können die lösbare und die unlösbare Verbindungsart bei dem Verankerungsstück und der Gegenschließeinheit kombiniert werden, wobei die Gegenschließeinheit gegebenfalls werksseitig an dem Rahmen durch Schweißen oder Löten befestigt sein kann, wogegen das Verankerungsstück durch eine lösbare Verbindung an dem Zweiradrahmen angebracht wird, um mit ein und demselben Gegenschließstück unterschiedlich lange Spiralkabel verwenden zu können. Die Befestigungseinrichtung kann dabei durch einen Gewindebolzen oder auch durch eine Klemmschelle gebildet sein. Schließlich besteht noch die Möglichkeit, daß werksseitig die Anbringung der erfindungsgemäßen Spiralkabelschloßeinrichtung vorbereitet wird, indem an dem Zweiradrahmen eine Befestigungseinrichtung, wie beispielsweise eine Öse oder Hülse mit einem Innengewinde, angebracht wird. Soll die Spiralkabelschloßeinrichtung nachträglich an dem Zweiradrahmen angebracht werden, so muß nur noch ein Schraubenbolzen in die Öse oder Hülse zum Festspannen der Gegenschließeinheit und/oder des Verankerungsstücks eingedreht werden.

Um zu verhindern, daß die Spiralkabelschloßeinrichtung bei einer Anbringung mittels wenigstens einer Befestigungseinrichtung durch unbefugte Personen von dem Zweiradrahmen abgenommen werden kann, wird weiterhin vorgeschlagen, daß die in die Gegenschließeinheit eingesetzte Schließeinheit die Befestigungseinrichtung verdeckt.

Eine besonders einfache und kompakte Bauweise der Spiralkabelschloßeinrichtung ergibt sich dann, wenn die Befestigungseinrichtung für die Gegenschließeinheit von einem Fortsatz eines sich über einer Orientierungswanne erhebenden, gegebenfalls mit einer Werkzeugangriffsstelle versehenen Schließbolzens gebildet ist. Dabei kann auf bereits von abnehmbaren Schloßeinrichtungen bekannte Schließelemente zurückgegriffen werden.

Die Befestigungseinrichtung für das Verankerungsstück und die Gegenschließeinheit kann durch einen Gewindebolzen gebildet sein, der den Zweiradrahmen durchsetzt und der das Verankerungsstück sowie die dem Verankerungsstück an dem Zweiradrahmen gegenüberliegende Gegenschließeinheit gegeneinander verspannt.

Bilden die Gegenschließeinheit und das Verankerungsstück eine gegebenenfalls einstückige Baueinheit, so verringert sich der Herstellungs-, Montage- und Materialaufwand. Die Spiralkabelschloßeinrichtung bildet dann ein kompaktes Bauelement, wobei für die Anbringung der Baueinheit an dem Rahmen eine Befestigungsart gewählt werden kann, die den Rahmen nicht schwächt, wie beispielsweise eine Querbohrung. Dabei kann die Baueinheit aus Gegenschließeinheit und Verankerungsstück, wie oben erläutert, lösbar oder unlösbar an dem Zweiradrahmen angebracht werden.

Um die Montage des Verankerungsstücks und/oder der Gegenschließeinheit zu erleichtern, wird weiterhin vorgeschlagen, daß das Verankerungsstück und/oder die Gegenschließeinheit mit einer Verdrehsicherung versehen sind, insbesondere mit einer zylindrischen Anlagefläche zur Anlage an einem Rahmenrohr. Durch die Verdrehsicherung wird darüber hinaus bei einer lösbaren Anbringung der Gegenschließeinheit an dem Zweiradrahmen die zwangsläufige Orientierung der Schließeinheit in der Orientierungswanne unterstützt.

Die nachträgliche Anbringung der erfindungsgemäßen Spiralkabelschloßeinrichtung kann werksseitig bei der Herstellung des Zweirads dadurch unterstützt werden, daß in einem Rahmenrohr eine Gewindeöse fest eingesetzt ist, an welcher ein Verankerungsstück und/oder eine Gegenschließeinheit festgeschraubt ist. Durch die Verwendung einer Gewindeöse wird eine Schwächung des Rahmens, wie sie beispielsweise bei einer durchgehenden Querbohrung auftritt, vermieden. Die Gewindeöse kann an dem Rahmen durch Pressen, Schweißen oder Löten befestigt werden.

Weitere vorteilhafte Ausgestaltungen sowie Ausführungsbeispiele werden nachstehend anhand der Zeichnung erläutert. Es zeigt:
- Figur 1: eine Seitenansicht einer erfindungsgemäßen Spiralkabelschloßeinrichtung bei Nichtgebrauch;
- Figur 2a: einen Schnitt durch eine Gegenschließeinheit der Spiralkabelschloßeinrichtung gemäß Fig. 1 im vergrößerten Maßstab;
- Figur 2b: eine Draufsicht auf ein im vergrößerten Maßstab dargestelltes Verankerungsstück der Spiralkabelschloßeinrichtung gemäß Fig. 1;
- Figur 3: eine vergrößerte Darstellung der Anbringung der Spiralkabelschloßeinrichtung gemäß Fig. 1 an einem Zweiradrahmen;
- Figur 4: eine Seitenansicht einer weiteren Ausführungsform der erfindungsgemäßen Spiralkabelschloßeinrichtung;
- Figur 5: eine Abwandlung der Ausführungsform gemäß Fig. 4;
- Figur 6: eine Seitenansicht einer weiteren Ausführungsform der erfindungsgemäßen Spiralkabelschloßeinrichtung bei Nichtgebrauch;
- Figur 6a-c: teilweise geschnittene Ansichten der Spiralkabelschloßeinrichtung gemäß Fig. 6, wobei Schließeinheit und Spiralkabel entfernt worden sind;
- Figur 7: einen Schnitt durch eine weitere Ausführungsform der erfindungsgemäßen Spiralkabelschloßeinrichtung, wobei das Spiralkabel entfernt worden ist; und
- Figur 7a-c: teilweise geschnittene Ansichten einer Baueinheit der Spiralkabelschloßeinrichtung gemäß Fig. 7.

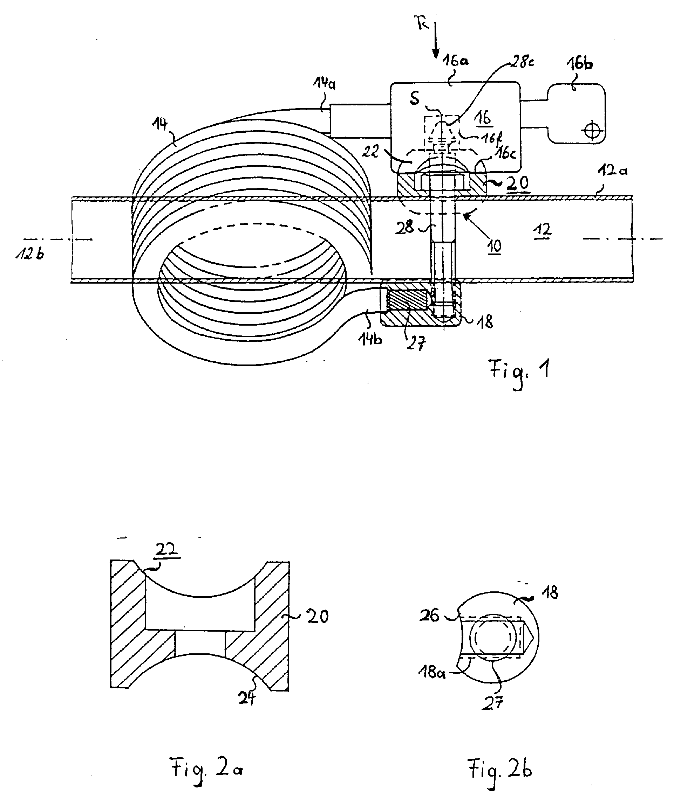

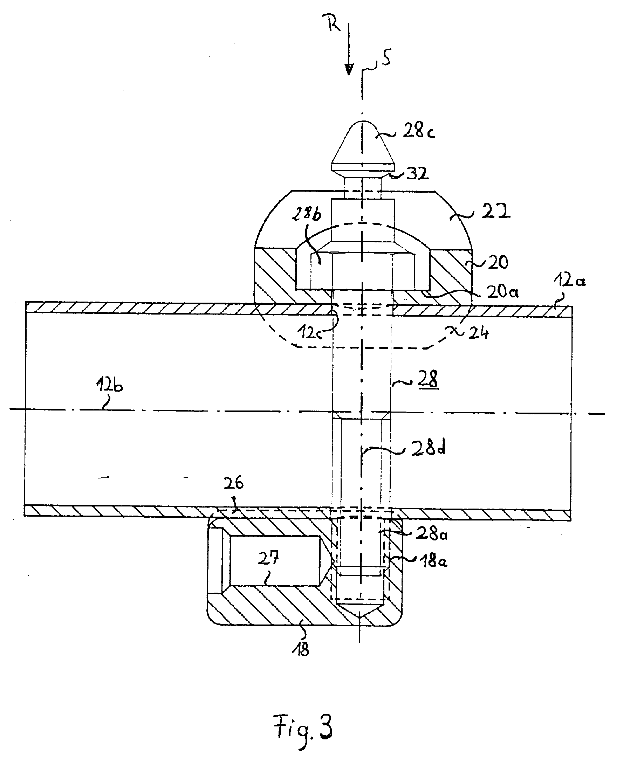

In der Figur 1 ist eine erfindungsgemäße Spiralkabelschloßeinrichtung 10 gezeigt, die an einem, einen im wesentlichen kreisförmigen Querschnitt aufweisenden, hohlen Rahmenabschnitt bzw. an einem Rahmenrohr 12a eines Zweiradrahmens 12, wie beispielsweise eines Fahrradrahmens, angeordnet ist. Die Spiralkabelschloßeinrichtung 10 weist ein aus einem mit einem Kunststoffschlauch ummantelten Drahtseil hergestelltes, eine die Spiralwicklung begünstigende innere Vorspannung besitzendes Spiralkabel 14 auf, dessen eines Ende 14a mit einer schlüsselbetätigbaren Schließeinheit 16 und dessen anderes Ende 14b mit einem Verankerungsstück 18 fest verbunden ist. Die Schließeinheit 16 wird bei bestimmungsgemäßem Gebrauch und bei Nichtgebrauch mit einer Gegenschließeinheit 20 verbunden.

Die Gegenschließeinheit 20 ist mit einer Orientierungswanne 22 und mit einem Schließbolzen 28c ausgeführt. Die Schließeinheit 16 weist ein zu dieser Orientierungswanne 22 komplementäres Orientierungsmittel auf, welches durch wenigstens eine Orientierungsfläche 16c in Form einer zum Schließkabelende achsparallelen Zylinderfläche der Außenumfangsfläche des Gehäuses 16a der Schließeinheit 16 gebildet ist.

Die Orientierungswanne 22 und der konvexe Flächenabschnitt 16c der Schließeinheit 16 definieren eine Verbindungsstellung, so daß die Schließeinheit 16 bei ihrer Verbindung mit der Gegenschließeinheit 20 in ihrer Lage gegenüber der Gegenschließeinheit 20 zwangsläufig so ausgerichtet wird, daß die Orientierungsmittel 16c, 22 der Schließeinheit 16 und der Gegenschließeinheit 20 in Eingriff gelangen. Dabei bildet die Orientierungswanne 22 auch eine Einweisungsfläche für die Schließeinheit 16, so daß diese beim Verbinden mit der Gegenschließeinheit 20 nur in einer angenäherten Stellung zu der ein reibungsloses Verbinden gestattenden Lage an der Gegenschließeinheit 20 angesetzt werden muß. Nach dem Verbinden ist die Schließeinheit 16 in ihrer Lage gegenüber der Gegenschließeinheit 20 festgelegt und kann sich nicht gegenüber der Gegenschließeinheit 20 verdrehen, insbesondere nicht bei einer Betätigung des Schließmechanismus für ein Lösen oder das Verbinden. Durch die Orientierungswanne 22 wird also gewährleistet, daß die Schließeinheit 16 beim Einstecken eines den Schließmechanismus der Schließeinheit 16 betätigenden Schlüssels 16b oder beim Aufschieben auf einen nachstehend noch erläuterten Schließbolzen 28 sich nicht verdrehen kann. Die Schließeinheit 16 nimmt somit an der Gegenschließeinheit 20 eine immer gleiche Lage ein.

Der Orientierungswanne 22 gegenüberliegend weist die Gegenschließeinheit 20 eine der Querschnittsform des Rahmenabschnitts 12a angepaßte, konkave Anlagefläche 24 auf, mittels derer die Gegenschließeinheit 20 an dem Rahmenabschnitt 12a des Zweirades unverdrehbar festlegbar ist.

In Figur 2b ist eine Draufsicht auf das Verankerungsstück 18 gezeigt. Auch das Verankerungsstück 18 besitzt eine der Querschnittsform des Rahmenabschnitts 12a angepaßte, konkave Anlagefläche 26, mittels derer das Verankerungsstück 18 unverdrehbar an dem Rahmenabschnitt 12a anliegt. Zur Aufnahme des Kabelendes 14b weist das Verankerungsstück 18 darüber hinaus eine parallel zur Mittellängslinie 12b des Rahmenabschnitts 12a verlaufende Aufnahmebohrung 27 auf, in der das von dem Kunststoffmantel befreite Drahtseil des Spiralkabels 14 eingesetzt und dort durch eine örtliche Materialverformung in dem Verankerungsstück 18 festgelegt ist.

In Figur 3 ist die Befestigung des Verankerungsstückes 18 und der Gegenschließeinheit 20 an dem Zweiradrahmen 12 dargestellt. Hierbei durchsetzt der eine Befestigungseinrichtung bildende Befestigungs- oder Gewindebolzen 28 eine Querbohrung 12c des Rahmenabschnitts 12a senkrecht zu dessen Mittellängslinie 12b. Das Verankerungsstück 18 und die Gegenschließeinheit 20 liegen jeweils mit ihren Anlageflächen 24 und 26 dicht an dem Rahmenabschnitt 12a an. Der Gewindebolzen 28 verspannt das Verankerungsstück 18 und die Gegenschließeinheit 20 gegeneinander, wobei er an seinem einen Ende einen Gewindeabschnitt 28a aufweist, der in eine senkrecht zu der Aufnahmebohrung 27 verlaufende Gewindebohrung 18a des Verankerungsstückes 18 eingreift (vgl. auch Fig. 2b). Der Gewindebolzen 28 stützt sich in einer Einsenkung der Orientierungswanne 22 an einer Bodenfläche 20a mit einem Flansch 28b ab, der als Mehrkant ausgebildet ist, und durchsetzt den Wannenboden sowie das Rahmenrohr 12a, um schließlich in das Verankerungsstück 18 einzugreifen. Der Mehrkant gestattet das Ansetzen eines Steckschlüssels zum Festspannen.

Der Schließbolzen 28c ist mit einem das Aufschieben der Schließeinheit 16 erleichternden Kegel ausgeführt und besitzt eine Rastschulter 32, hinter die ein Verriegelungselement der Schließeinheit einrasten kann. Der Schließbolzen 28c greift in eine Führungsaufnahme 16f der Schließeinheit 16 im wesentlichen taumelfrei, aber drehbar ein.

Zum Festlegen der Schließeinheit 16 wird diese mit einer nicht weiter dargestellten Aufnahmebohrung für den Schließbolzen 28c auf den Kegel aufgesetzt und solange entlang einer Zusammensteckachse S, die mit der Mittellängslinie 28b des Schließbolzens 28c identisch ist, in einer Richtung R auf die Gegenschließeinheit 20 verschoben, bis das Gehäuse 16a der Schließeinheit 16 in der Orientierungswanne 22 zum Liegen kommt. Dabei verrastet automatisch wenigstens ein nicht weiter dargestelltes Verriegelungselement der Schließeinheit 16 hinter der Rastschulter 32. Soll die Schließeinheit 16 von der Gegenschließeinheit 20 abgenommen werden, so wird mittels des Schlüssels 16b Verriegelungselement ausgerückt. Die Schließeinheit 16 kann dann von der Gegenschließeinheit 20 abgenommen werden.

Wie aus der Figur 1 hervorgeht, sind die Aufnahmebohrung 27 für das Kabelende 14b des Spiralkkabels 14 und die Schließeinheit 16 mit dem anderen Kabelende 14a so gegenüber dem Rahmen 12 orientiert, daß die Einläufe der Kabelenden 14a, 14b parallel zueinander beabstandet und zu der Mittellängsachse 12b des Rahmenabschnitts 12a sowie tangential zu dem Spiralverlauf des Spiralkabels 14 verlaufen. Hierdurch wird die Spiralbildung unterstützt und eine dichte Anordnung des Spiralkabels 14 an dem Rahmenabschnitt 12a erreicht.

In den Figuren 4 bis 7b sind weitere Ausführungsformen der erfindungsgemäßen Spiralkabelschloßeinrichtung gezeigt. Hierbei sind analoge Teile mit gleichen Bezugszeichen wie in den Figuren 1 bis 3 versehen, jeweils um 100 erhöht.

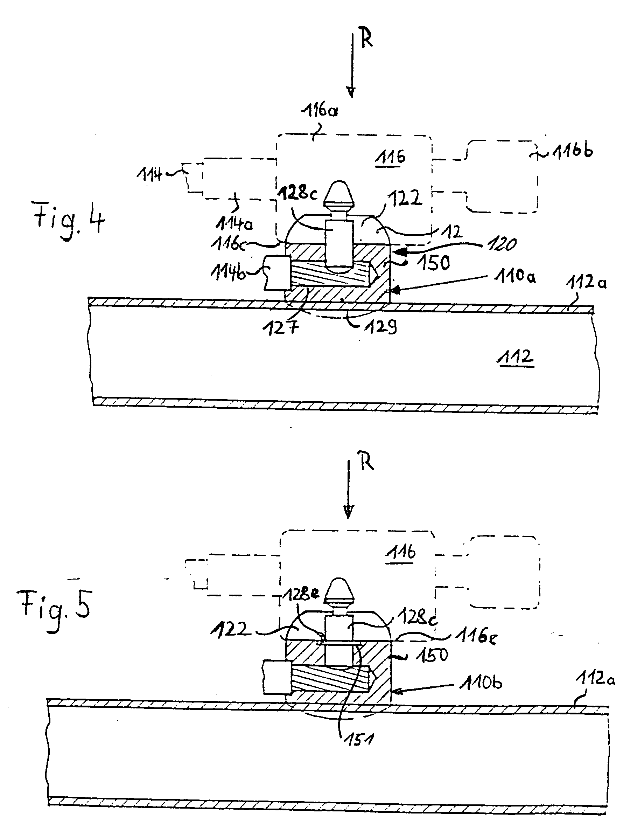

Die in den Figuren 4 und 5 gezeigten Spiralkabelschloßeinrichtungen 110a, 110b unterscheiden sich von der in den Figuren 1 - 3 gezeigten Spiralkabelschloßeinrichtung 10 dadurch, daß das Verankerungsstück und die Gegenschließeinheit eine zusammengefaßte Baueinheit 150 bilden. Diese Baueinheit 150 weist wiederum eine Orientierungswanne 122 auf, während die Schließeinheit 116 mit dem hierzu komplementären konvexen Flächenabschnitt 116c versehen ist. Darüber hinaus weist die Baueinheit 150 eine dem Querschnitt des Rahmenabschnitts 112a angepaßte Anlagefläche 129 auf. Das eine Ende 114b des Spiralkabels 114 ist in der Baueinheit 150 ebenfalls wieder in eine Aufnahmebohrung 127 eingesetzt und dort durch eine örtliche Materialverformung der Baueinheit 150 festgelegt. Der Schließbolzen 128c durchsetzt hierbei nicht den Rahmenabschnitt 112a, sondern ist in der Baueinheit 150 fest eingepreßt. Selbestverständlich kann er aber auch in die Baueinheit 150 eingeschraubt oder auf andere Art und Weise in dieser festgelegt sein. Dabei taucht er teilweise in die Aufnahmebohrung 127 für das Spiralkabel 114 ein und legt dieses dort zusätzlich fest. Um eine sichere Verriegelung zwischen dem Schließbolzen 128c und der Schließeinheit 116 zu gewährleisten, ist zum Einsetzen des Schließbolzens 128c ein Anschlag vorzusehen, der die genaue Lage des Schließbolzens 128c festlegt. Dies kann zum einen dadurch geschehen, daß sich an der Maschine, mittels derer der Schließbolzen 128 in die Baueinheit 150 eingesetzt wird, ein Anschlag befindet. Alternativ kann, wie aus Figur 5 hervorgeht, der Schließbolzen 128c einen Flansch 128e aufweisen, der zur Anlage an einem Absatz 151 der Baueinheit 150 kommt. Das Verbinden der Schließeinheit 116 mit der Gegenschließeinheit 120 bzw. das Lösen der Schließeinheit 116 erfolgt hierbei auf die gleiche Weise, wie bei der Ausführungsform der Spiralkabelschloßeinrichtung 10 gemäß den Figuren 1 bis 3.

Die Baueinheit 150 ist dabei an dem Rahmenabschnitt 112a festgelötet. Selbstverständlich kann sie aber auch festgeschweißt sein.

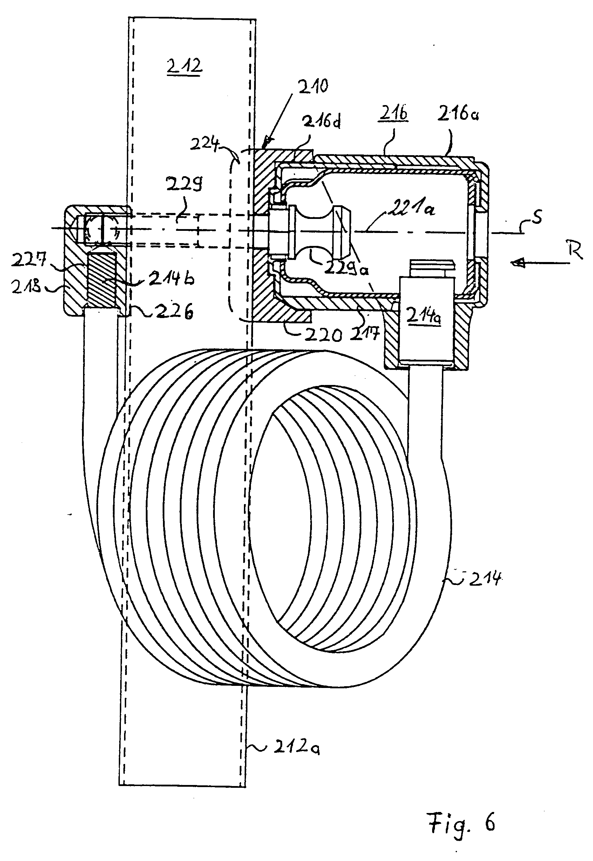

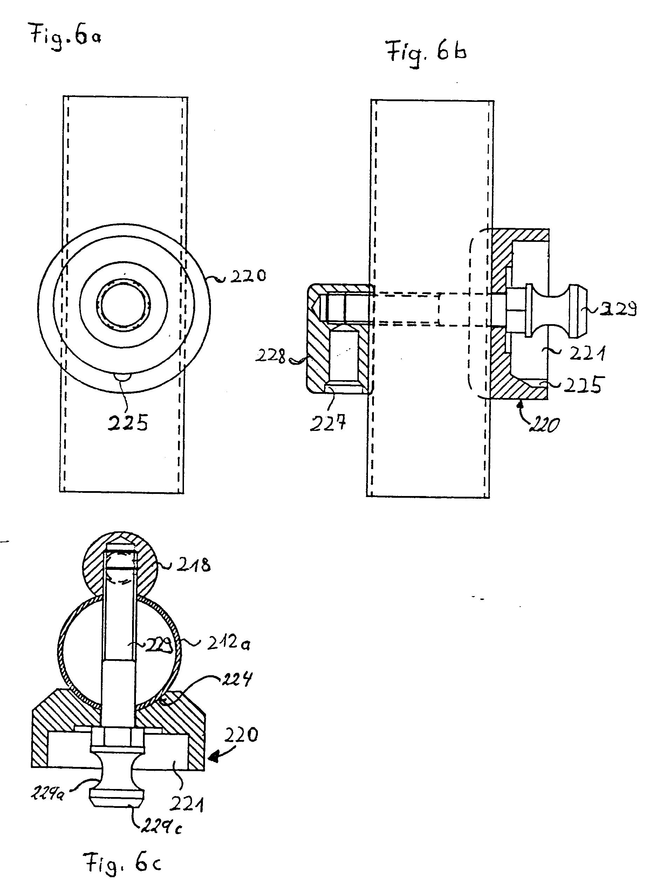

In den Figuren 6 bis 6c ist eine weitere Ausführungsform der Spiralkabelschloßeinrichtung gezeigt, die sich von der Ausführungsform gemäß den Figuren 1 bis 3 dadurch unterscheidet, daß die Orientierungsmittel an der Gegenschließeinheit 220 durch eine topfförmige Wanne 221 mit annähernd kreiszylindrischem Mantel und mit einer zu der Mittellängslinie 212b des Rahmenabschnitts 212a senkrecht verlaufenden, eine Zusammensteckachse S definierenden Mittelachse 221a gebildet sind. In die Wanne 221 wird ein Wanneneingriffsstück 216d des Gehäuses 216a der Schließeinheit 216 als komplementäre Orientierungsmittel beim Verbinden mit der Gegenschließeinheit 220 eingesetzt. Darüber hinaus sind an der Außenumfangsfläche der Schließeinheit 216 eine Rippe 217 (siehe Fig. 6) und an einer Innenumfangsfläche der Wanne 221 eine der Rippe 217 formangepaßte Ausnehmung 225 der Gegenschließeinheit 220 (vgl. Fig. 6a und 6b) angebracht. Selbstverständlich kann die Rippe 217 auch an der Innenumfangsfläche der Wanne 221 und die Ausnehmung 225 an dem Gehäuse 216a der Schließeinheit 216 angebracht sein. Vorzugsweise können dabei auch mehrere Rippen 217 und eine entsprechende Anzahl an Ausnehmungen 225 vorgesehen werden.

Soll die Schließeinheit 216 mit der Gegenschließeinheit 220 verbunden werden, so wird die Schließeinheit 216 an der Gegenschließeinheit 220 in der Weise angesetzt, daß die Rippe 217 mit der Ausnehmung 225 der Gegenschließeinheit 220 ungefähr fluchtet. Vor einem weiteren Einschieben der Schließeinheit 216 längs der Zusammensteckachse S in Richtung R in die Wanne 221 wird durch Drehung der Schließeinheit 216 diese in Registerstellung zur Gegenschließeinheit 220 gebracht, in der die Schließeinheit 216 und die Gegenschließeinheit 220 miteinander koppelbar sind.

Der Wanne 221 gegenüberliegend ist die Gegenschließeinheit 220 mit einer der Form des Rahmenabschnitts 212a angepaßten, konkaven Anlagefläche 224 als Verdrehsicherung versehen (vgl. Fig. 6c). Das Verankerungsstück 218 entspricht dem Verankerungsstück 18 gemäß den Figuren 1 bis 3. Das Verankerungsstück 218 und die diesem gegenüberliegend an dem Rahmenabschnitt 212a angeordnete Gegenschließeinheit 220 werden über einen Gewindebolzen 229 gegeneinander verspannt. Dieser Gewindebolzen 229 unterscheidet sich von dem Gewindebolzen 28 gemäß den Figuren 1 bis 3 dadurch, daß sein über den Boden der Wanne 221 hinausragendes, als Schließbolzen dienendes Endstück 229c mit einer Einschnürung 229a versehen ist, die mit nicht weiter gezeigten Verriegelungselementen des Schließmechanismus der Schließeinheit 216 zum lösbaren Verriegeln der Schließeinheit 216 mit der Gegenschließeinheit 220 zusammenwirkt.

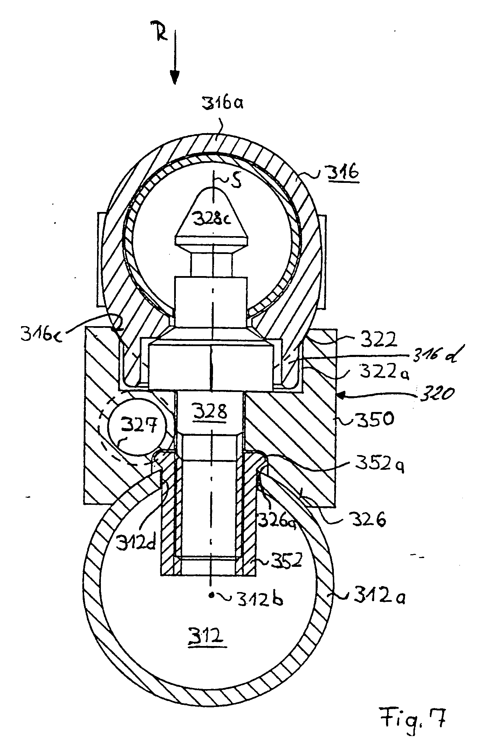

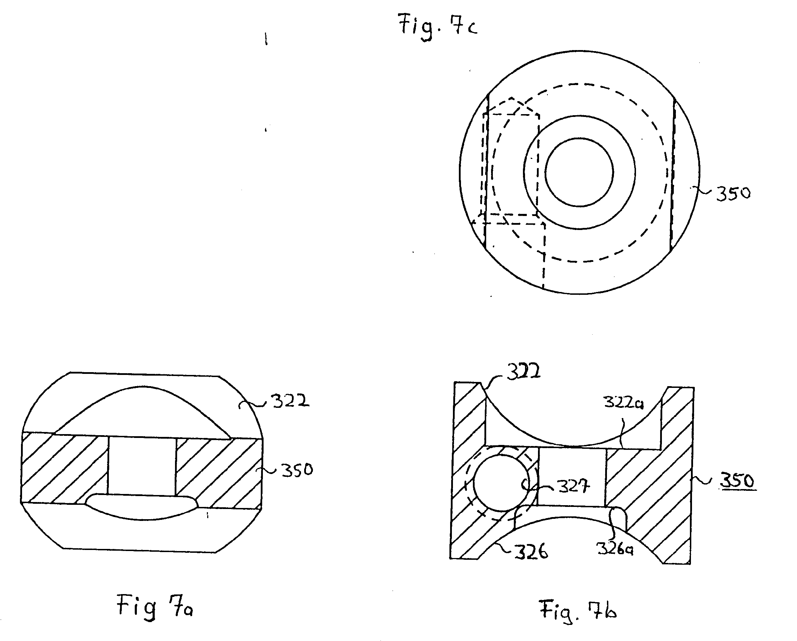

In den Figuren 7 bis 7c ist eine weitere Ausführungsform gezeigt, bei der das Verankerungsstück und die Gegenschließeinheit 320 eine einstückige Baueinheit 350 bilden. Diese Baueinheit 350 besitzt die ein Orientierungsmittel bildende Orientierungswanne 322, während die Schließeinheit 316 den das hierzu komplementäre Orientierungsmittel bildenden Flächenabschnitt 316c aufweist. Die Gegenschließeinheit 320 ist lösbar an dem Zweiradrahmen 312 angebracht. Hierzu ist der Zweiradrahmen 312 mit einer senkrecht zu seiner Mittellängslinie 312b verlaufenden Bohrung 312d versehen. In diese Bohrung 312d ist eine Gewindeöse 352 unverlierbar eingesetzt, beispielsweise durch Einpressen, Anschweißen oder Anlöten. Die Anbringung der Gewindeöse 352 kann dabei bereits werkseitig bei der Herstellung des Zweirades erfolgen oder aber auch nachträglich in einer Werkstatt. Die Gewindeöse 352 weist an ihrem aus dem Rahmen 312 hervorstehenden Teil einen Absatz 352a auf, der zum einen die Montage der Gewindeöse 352 erleichtern soll und zum anderen bei einem Festschweißen oder Festlöten der Gewindeöse 352 das Anbringen einer Schweiß- oder Lötnaht erleichtern soll. In diese Gewindeöse 352 kann dann wiederum ein Befestigungsbolzen 328 eingedreht werden, der zum Befestigen der Baueinheit 350 an dem Rahmen 312 dient und zum Anschließen der Schließeinheit 316 ein als Schließbolzen 328c ausgebildetes Endstück aufweist.

Die konkave Anlagefläche 326 weist eine Ausnehmung 326a zur Aufnahme des Absatzes 352a der Gewindeöse 352 auf. Die Orientierungswanne 322 ist mit einer Ausnehmung 322a versehen, in die ein entsprechend geformter Vorsprung 316d der Schließeinheit 316 eingreift.

Die Orientierungsflächen der Schließeinheit und der Gegenschließeinheit können mit den Befestigungseinrichtungen der anderen Ausführungsformen kombiniert werden.

Die Verankerungsstücke 18, 218, die Orientierungswannen 22, 221 und die Baueinheit 350 können aus Kunststoff hergestellt werden.

## Patentansprüche

1. Spiralkabelschloßeinrichtung an oder zum Anbau an einem Zweiradrahmen (12), bei welcher das eine Ende (14b) eines Spiralkabels (14) am Zweiradrahmen (12), insbesondere in einem am Zweiradrahmen fest angebrachten oder anbringbaren Verankerungsstück (18) unverlierbar verankert ist und das andere Ende (14a) des Spiralkabels (14) mit einer Schließeinheit (16) ausgeführt ist, welche mit einer am Zweiradrahmen (12) angebrachten oder anbringbaren Gegenschließeinheit (20) verbindbar ist,
wobei an der Gegenschließeinheit (20) und an der Schließeinheit (16) komplementäre Orientierungsmittel (16c,22) vorgesehen sind, welche beim Verbinden der Schließeinheit (16) mit der Gegenschließeinheit (20) zwangsläufig in Eingriff gebracht werden und einen oder mehrere Freiheitsgrade der Bewegung zwischen Schließeinheit (16) und Gegenschließeinheit (20) unterdrücken, und
wobei die Gegenschließeinheit (20) und die Schließeinheit (16) zum Zusammenstecken in einer durch die Gestaltung von Gegenschließeinheit (20) und Schließeinheit (16) definierten Steckrichtung (R) ausgebildet sind,
dadurch gekennzeichnet,
daß die komplementären Orientierungsmittel (16c,22) derart ausgebildet sind, daß sie eine Relativdrehung von Gegenschließeinheit (20) und Schließeinheit (16) um die Steckrichtung (R) unterdrücken.

2. Spiralkabelschloßeinrichtung nach Anspruch 1,
dadurch gekennzeichnet,
daß die Gegenschlißeinheit (20) mit den zugehörigen Orientierungsmitteln (22) am Zweiradrahmen (12) unbeweglich angebracht ist.

3. Spiralkabelschloßeinrichtung nach einem der Ansprüche 1 bis 2,
**dadurch gekennzeichnet,**
daß das eine Ende (14b) des Spiralkabels (14) am Zweiradrahmen (12) unbeweglich verankert ist.

4. Spiralkabelschloßeinrichtung nach einem der Ansprüche 1 bis 3,
**dadurch gekennzeichnet,**
daß die Einläufe der beiden Enden (14a,14b) des Spiralkabels (14) in das Verankerungsstück (18) bzw. die Schließeinheit (16) in der durch die komplementären Orientierungsmittel (16c,22) festgelegten Verbindungsstellung von Schließeinheit (16) und Gegenschließeinheit (20) eine die Ausbildung einer Spirale des Spiralkabels (14) begünstigende Relativlage und Relativorientierung einnehmen.

5. Spiralkabelschloßeinrichtung nach Anspruch 4,
**dadurch gekennzeichnet,**
daß die Einläufe im wesentlichen zueinander parallel sind.

6. Spiralkabelschloßeinrichtung nach Anspruch 5,
**dadurch gekennzeichnet,**
daß die Einläufe im wesentlichen parallel zu einem Rahmenrohr (12a) sind, an welchem das Verankerungsstück (18) und die Gegenschließeinheit (20) angebracht sind.

7. Spiralkabelschloßeinrichtung nach einem der Ansprüche 4 bis 6,
**dadurch gekennzeichnet,**
daß bei Ausführung des Spiralkabels (14) mit einer eine vorgegebene Spiralwicklung begünstigenden inneren Vorspannung die Einläufe derart parallel zueinander beabstandet sind, daß sie im wesentlichen tangential zu einem durch die innere Vorspannung begünstigten Spiralverlauf liegen.

8. Spiralkabelschloßeinrichtung nach einem der Ansprüche 1 bis 7,
**dadurch gekennzeichnet,**
daß an der Schließeinheit (16) und an der GegenSchließeinheit (20) komplementäre teilzylindrische oder teilprismatische Orientierungs- und gegebenenfalls Einweisungsflächen (16c,22) angebracht sind, deren Achsen eine Zusammensteckrichtung (R) der Gegenschließeinheit (20) und der Schließeinheit (16) im wesentlichen senkrecht schneiden.

9. Spiralkabelschloßeinrichtung nach Anspruch 8,
**dadurch gekennzeichnet,**
daß eine Orientierungsfläche der Gegenschließeinheit (20) als Orientierungswanne (22) und die komplementäre Orientierungsfläche der Schließeinheit (16) als eine der Wannenfläche komplementäre Fläche (16c) ausgebildet ist, insbesondere als eine zum zugehörigen Schließkabelende achsparallele oder koaxiale Zylinderfläche.

10. Spiralkabelschloßeinrichtung nach Anspruch 9,
**dadurch gekennzeichnet,**
daß ein Schließbolzen (28c) der Gegenschließeinheit (20) an der Wannensohle sich über dieser erhebend angebracht ist und an der Schließeinheit (16) eine entsprechende Schließbolzenaufnahme (16f) angebracht ist.

11. Spiralkabelschloßeinrichtung nach einem der Ansprüche 1 bis 7,
**dadurch gekennzeichnet,**
daß an der Gegenschließeinheit (220) und der Schließeinheit (216) komplementäre Orientierungsmittel (217,225) angebracht sind, welche durch Drehung der Schließeinheit (216) um eine Zusammensteckachse (S) von Gegenschließeinheit (220) und Schließeinheit (216) in Registerstellung bringbar sind, in der die Schließeinheit (216) und die Gegenschließeinheit (220) miteinander koppelbar sind.

12. Spiralkabelschloßeinrichtung nach Anspruch 11,
**dadurch gekennzeichnet,**
daß die Orientierungsmittel der Gegenschließeinheit (220) eine um die Zusammensteckachse (S) zentrische Wanne (221) und die Orientierungsmittel der Schließeinheit (216) ein um die Zusammensteckachse (S) konzentrisches Wanneneingriffsstück (216d) umfassen und daß an je einer Umfangsfläche der Wanne (221) bzw. des Wanneneingriffsstücks eine Paarung einer Orientierungsausnehmung (225) und eines Orientierungsvorsprungs (217) angebracht sind.

13. Spiralkabelschloßeinrichtung nach einem der Ansprüche 1 bis 12,
**dadurch gekennzeichnet,**
daß die Schließeinheit (16) von der Gegenschließeinheit (20) durch Schlüsselbetätigung oder Schließge- heimniseinstellung lösbar ist.

14. Spiralkabelschloßeinrichtung nach einem der Ansprüche 1 bis 13,
**dadurch gekennzeichnet,**
daß ein durch Schlüsselbetätigung oder Schließge- heimniseinstellung lösbarer Schließmechanismus in der Schließeinheit (16) untergebracht ist.

15. Spiralkabelschloßeinrichtung nach einem der Ansprüche 1 bis 13,
**dadurch gekennzeichnet,**
daß ein durch Schlüsselbetätigung oder Schließgeheimniseinstellung lösbarer Schließmechanismus in der Gegenschließeinheit (20) untergebracht ist.

16. Spiralkabelschloßeinrichtung nach einem der Ansprüche 1 bis 15,
**dadurch gekennzeichnet,**
daß das Verankerungsstück (150) und/oder die Gegenschließeinheit (150) an dem Zweiradrahmen (112) unlösbar angebracht sind.

17. Spiralkabelschloßeinrichtung nach einem der Ansprüche 1 bis 15,
**dadurch gekennzeichnet,**
daß das Verankerungsstück (18) und/oder die Gegenschließeinheit (20) an dem Zweiradrahmen (12) lösbar durch wenigstens eine Befestigungseinrichtung (28,28b) angebracht sind.

18. Spiralkabelschloßeinrichtung nach Anspruch 17,
**dadurch gekennzeichnet,**
daß die in die Gegenschließeinheit (20) eingesetzte Schließeinheit (16) die Befestigungseinrichtung (28,28b) verdeckt.

19. Spiralkabelschloßeinrichtung nach Anspruch 18,
**dadurch gekennzeichnet,**
daß die Befestigungseinrichtung (28) für die Gegenschließeinheit (20) von einem Fortsatz (28) eines sich über einer Orientierungswanne (22) erhebenden, gegebenenfalls mit einer Werkzeugangriffsstelle (28b) versehenen Schließbolzens (28c) der Gegenschließeinheit (20) gebildet ist.

20. Spiralkabelschloßeinrichtung nach einem der Ansprüche 17 bis 19,
**dadurch gekennzeichnet,**
daß die Befestigungseinrichtung (28) für das Verankerungsstück (18) und die Gegenschließeinheit (20) durch einen Gewindebolzen (28) gebildet ist, der den Zweiradrahmen (12) durchsetzt und der das Verankerungsstück (18) sowie die dem Verankerungsstück (18) an dem Zweiradrahmen (12) gegenüberliegend angeordnete Gegenschließeinheit (20) gegeneinander verspannt.

21. Spiralkabelschloßeinrichtung nach einem der Ansprüche 1 bis 19,
**dadurch gekennzeichnet,**
daß die Gegenschließeinheit und das Verankerungsstück eine Baueinheit (150) bilden, gegebenenfalls eine einstückige Baueinheit.

22. Spiralkabelschloßeinrichtung nach einem der Ansprüche 1 bis 21, **dadurch gekennzeichnet,** daß das Verankerungsstück (18) und/oder die Gegenschließeinheit (20) mit einer Verdrehsicherung (24,26) versehen sind, insbesondere mit einer zylindrischen Anlagefläche zur Anlage an einem Rahmenrohr (12).

23. Spiralkabelschloßeinrichtung nach einem der Ansprüche 1 bis 19, 21 und 22,
**dadurch gekennzeichnet,**
daß in einem Rahmenrohr (312a) eine Gewindeöse (352) eingesetzt ist, an welcher ein Verankerungsstück (350) und/oder eine Gegenschließeinheit (320) festgeschraubt ist.

## Claims

1. Locking device with a spiral cable on or for attachment to a bicycle frame (12), in which the one end (14b) of a spiral cable (14) is undetachably anchored to the bicycle frame (12), in particular in an anchoring member (18) fixed or able to be fixed to the bicycle frame and the other end (14a) of the spiral cable (14) is constructed with a closing unit (16), which can be connected to a counter-closing unit (20) fixed or able to be fixed on the bicycle frame (12), complementary orienting means (16c, 22) being provided on the counter-closing unit (20) and on the closing unit (16), which means are brought into positive engagement when connecting the closing unit (16) to the counter-closing unit (20) and suppress one or more degrees of freedom of the movement between the closing unit (16) and counter-closing unit (20), and the counter-closing unit (20) and the closing unit (16) being constructed for assembly in an insertion direction (R) defined by the design of the counter-closing unit (20) and the closing unit (16), characterised in that the complementary orienting means (16c, 22) are constructed so that they suppress a relative rotation of the counter-closing unit (20) and closing unit (16) about the insertion direction (R).

2. Locking device with a spiral cable according to Claim 1, characterised in that the counter-closing unit (20) with the associated orienting means (22) is fixed to the bicycle frame (12).

3. Locking device with a spiral cable according to one of Claims 1 to 2, characterised in that the one end (14b) of the spiral cable (14) is immovably anchored on the bicycle frame (12).

4. Locking device with a spiral cable according to one of Claims 1 to 3, characterised in that the inlets of the two ends (14a, 14b) of the spiral cable (14) into the anchoring member (18) or the closing unit (16), in the connecting position of the closing unit (16) and counter-closing unit (20) determined by the complementary orienting means (16c, 22), adopt a relative position and relative pre-orientation favouring the formation of a spiral of the spiral cable (14).

5. Locking device with a spiral cable according to Claim 4, characterised in that the inlets are substantially parallel to each other.

6. Locking device with a spiral cable according to Claim 5, characterised in that the inlets are substantially parallel to a frame tube (12a), on which the anchoring member (18) and the counter-closing unit (20) are located.

7. Locking device with a spiral cable according to one of Claims 4 to 6, characterised in that when constructing the spiral cable (14) with an inner pre-tension favouring a predetermined spiral coil, the inlets are spaced apart parallel to each other so that they lie substantially tangentially to a spiral shape favouring the inner pretension.

8. Locking device with a spiral cable according to one of Claims 1 to 7, characterised in that located on the closing unit (16) and on the counter-closing unit (20) are complementary, partially cylindrical or partially prismatic orienting and if necessary guiding surfaces (16c, 22), whereof the axes intersect substantially at right angles an assembly direction (R) of the counter-closing unit (20) and of the closing unit (16).

9. Locking device with a spiral cable according to Claim 8, characterised in that an orienting surface of the counter-closing unit (20) is constructed as an orienting trough (22) and the complementary orienting surface of the closing unit (16) is constructed as a surface (16c) complementing the trough surface, in particular as a cylindrical surface axis parallel to or coaxial to the associated end of the closing cable.

10. Locking device with a spiral cable according to Claim 9, characterised in that a closing bolt (28c) of the counter-closing unit (20) is located on the base of the trough rising above the latter and a corresponding closing bolt receptacle (16f) is located on the closing unit (16).

11. Locking device with a spiral cable according to one of Claims 1 to 7, characterised in that located on the counter-closing unit (220) and the closing unit (216) are complementary orienting means (217, 225), which by rotation of the closing unit (216) about an assembly axis (S) of the counter-closing unit (220) and closing unit (216) can be brought into a registering position, in which the closing unit (216) and the counter-closing unit (220) can be connected to each other.

12. Locking device with a spiral cable according to Claim 11, characterised in that the orienting means of the counter-closing unit (220) comprise a trough (221) which is central about the assembly axis (S) and the orienting means of the closing unit (216) comprise a trough engagement member (216d) concentric about the assembly axis (S) and that located on respectively one peripheral surface of the trough (221) or of the trough engagement member is a pair consisting of an orienting recess (225) and an orienting projection (217).

13. Locking device with a spiral cable according to one of Claims 1 to 12, characterised in that the closing unit (16) can be released from the counter-closing unit (20) by the actuation of a key or setting a combination.

14. Locking device with a spiral cable according to one of Claims 1 to 13, characterised in that located in the closing unit (16) is a closing mechanism able to be released by actuating a key or setting a combination.

15. Locking device with a spiral cable according to one of Claims 1 to 13, characterised in that a locking mechanism able to be released by the actuation of a key or by setting a combination is located in the counter-closing unit (20).

16. Locking device with a spiral cable according to one of Claims 1 to 15, characterised in that the anchoring member (150) and/or the counter-closing unit (150) are undetachably located on the bicycle frame (112).

17. Locking device with a spiral cable according to one of Claims 1 to 15, characterised in that the anchoring member (18) and/or the counter-closing unit (20) are detachably located on the bicycle frame (12) by at least one attachment device (28, 28b).

18. Locking device with a spiral cable according to Claim 17, characterised in that the closing unit (16) inserted in the counter-closing unit (20) covers the attachment device (28, 28b).

19. Locking device with a spiral cable according to Claim 18, characterised in that the attachment device (28) for the counter-closing unit (20) is formed by a projection (28) of a closing bolt (28c) of the counter-closing unit (20) rising above an orienting trough (22) and possibly provided with a tool engagement point (28b).

20. Locking device with a spiral cable according to one of Claims 17 to 19, characterised in that the attachment device (28) for the anchoring member (18) and the counter-closing unit (20) is formed by a threaded bolt (28), which penetrates the bicycle frame (12) and which braces the anchoring member (18) as well as the counter-closing unit (20) located opposite the anchoring member (18) on the bicycle frame (12) one against the other.

21. Locking device with a spiral cable according to one of Claims 1 to 19, characterised in that the counter-closing unit and the anchoring member form a structural unit (150), possibly a one-piece structural unit.

22. Locking device with a spiral cable according to one of Claims 1 to 21, characterised in that the anchoring member (18) and/or the counter-closing unit (20) are provided with means (24, 26) for preventing rotation, in particular with a cylindrical abutment surface for abutment against a frame tube (12).

23. Locking device with a spiral cable according to one of Claims 1 to 19, 21 and 22, characterised in that inserted in a frame tube (312a) is a screw ring (352), onto which an anchoring member (350) and/or a counter-closing unit (320) is screwed securely.

## Revendications

1. Système de fermeture muni d'un câble en forme de spirale, sur ou pour le montage sur un cadre de bicyclette (12), dans lequel une extrémité (14b) d'un câble (14) en forme de spirale est ancré de façon imperdable sur le cadre de bicyclette (12), en particulier dans une pièce d'ancrage (18) montée rigidement ou pouvant être rapportée, et l'autre extrémité (14a) du câble (14) en forme de spirale est réalisé avec une unité de fermeture (16) susceptible d'être reliée à une contre-unité de fermeture (20) montée ou pouvant être rapportée sur la cadre de bicyclette (12),
sur la contre-unité de fermeture (20) et sur l'unité de fermeture (16), des moyens d'orientations (16c, 22) complémentaires étant prévus qui, lors de la liaison de l'unité de fermeture (16) à la contre-unité de fermeture (20), sont amenés obligatoirement en prise et diminuent d'un ou de plusieurs degrés de liberté le déplacement entre unité de fermeture (16) et contre-unité de fermeture (20), et où la contre-unité de fermeture (20) et l'unité de fermeture (16) sont réalisées pour être enfichées dans une direction d'enfichage (R) définie par la configuration de la contre-unité de fermeture (20) et de l'unité de fermeture (16),
caractérisé en ce que les moyens d'orientation (16c, 22) complémentaires sont réalisés de manière qu'ils empêchent toute rotation relative entre la contre-unité de fermeture (20) et l'unité de fermeture (16) autour de la direction d'enfichage (R).

2. Système de fermeture muni d'un câble en forme de spirale, selon la revendication 1, caractérisé en ce que la contre-unité de fermeture (20) est montée immobile, avec les moyens d'orientation (22) correspondants, sur le cadre de bicyclette (12).

3. Système de fermeture muni d'un câble en forme de spirale, selon l'une des revendications 1 à 2, caractérisé en ce qu'une extrémité (14b) du câble (14) en forme de spirale est ancrée à demeure sur le cadre de bicyclette (12).

4. Système de fermeture muni d'un câble en forme de spirale, selon l'une des revendications 1 à 3, caractérisé en ce que les entrées des deux extrémités (14a, 14b) du câble (14) en forme de spirale dans la pièce d'ancrage (18), respectivement dans l'unité de fermeture (16), dans la position de liaison fixée par les moyens d'orientation (16c, 22) complémentaires, de l'unité de fermeture (16) et de la contre-unité de fermeture (20), prennent une position relative et une orientation relative favorisant la constitution d'une forme en spirale du câble (14) en forme de spirale.

5. Système de fermeture muni d'un câble en forme de spirale, selon la revendication 4, caractérisé en ce que les entrées sont sensiblement parallèles.

6. Système de fermeture muni d'un câble en forme de spirale, selon la revendication 5, caractérisé en ce que les entrées sont sensiblement parallèles à un tube du cadre (12a), sur lequel la pièce d'ancrage (18) et la contre-unité de fermeture sont montées.

7. Système de fermeture muni d'un câble en forme de spirale, selon l'une des revendications 4 à 6, caractérisé en ce que, en cas de réalisation du câble (14) en forme d'hélice avec une précontrainte interne favorisant un enroulement en spirale prédéterminé, les entrées sont placées parallèlement et espacées l'une par rapport à l'autre de manière qu'elles sont sensiblement tangentes à la spirale, dont la mise en forme est favorisée par la précontrainte interne.

8. Système de fermeture muni d'un câble en forme de spirale, selon l'une des revendications 1 à 7, caractérisé en ce que sur l'unité de fermeture (16) est sur la contre-unité de fermeture (20) sont montées des surfaces d'orientation et, le cas échéant, de repérage (16c, 22) complémentaires, en forme de parties de cylindre ou de partie de prisme, surfaces dont les axes coupent sensiblement perpendiculairement une direction d'enfichage conjoint (R) de la contre-unité de fermeture (20) et de l'unité de fermeture (16).

9. Système de fermeture muni d'un câble en forme de spirale selon la revendication 8, caractérisé en ce qu'une surface d'orientation de la contre-unité de fermeture (20) est réalisée sous forme de cuve d'orientation (22) et la surface d'orientation complémentaire de l'unité de fermeture (16) est réalisée sous forme d'une surface (16c), complémentaire de la surface de cuve, en particulier sous forme de surface cylindrique, à axe parallèle ou coïncidant avec celui de l'extrémité du câble de fermeture afférent.

10. Système de fermeture muni d'un câble en forme de spirale selon la revendication 9, caractérisé en ce qu'un boulon de fermeture (28c) de la contre-unité de fermeture (20) est monté sur la semelle de cuve et fait saillie au-dessus de celle-ci et un logement de boulon de fermeture (16f) correspondant est ménagé dans l'unité de fermeture (16).

11. Système de fermeture muni d'un câble en forme de spirale selon l'une des revendications 1 à 7, caractérisé en ce que, sur la contre-unité de fermeture (220) et l'unité de fermeture (216), sont montés des moyens d'orientation (217, 225) complémentaires, susceptibles d'être placés en coïncidence par rotation de l'unité de fermeture (216) autour d'un axe d'enfichage (S) à la contre-unité de fermeture (220) et à l'unité de fermeture (216), position de coïncidence dans laquelle l'unité de fermeture (216) et la contre-unité de fermeture (216) peuvent être couplées ensemble.

12. Système de fermeture muni d'un câble en forme de spirale selon la revendication 11, caractérisé en ce que les moyens d'orientation de la contre-unité de fermeture (220) comprennent une cuve (221) centrée autour de l'axe d'enfichage (S) et les moyens d'orientation de l'unité de fermeture (216) comprennent une pièce d'engagement de cuve (216d) concentrique par rapport à l'axe d'enfichage (S), et en ce que sur une surface périphérique de la cuve (221), ou la pièce d'engagement de cuve, est monté un couple, constitué d'un évidement d'orientation (225) et d'une saillie d'orientation (217).

13. Système de fermeture muni d'un câble en forme de spirale selon l'une des revendications 1 à 12, caractérisé en ce que l'unité de fermeture (16) peut être désolidarisée de la contre-unité de fermeture (20) par actionnement d'une clé ou bien par réglage d'un code secret de fermeture.

14. Système de fermeture muni d'un câble en forme de spirale selon l'une des revendications 1 à 13, caractérisé en ce qu'un mécanisme de fermeture, pouvant être désolidarisé, par actionnement d'une clé ou bien réglage d'un code secret de fermeture, est logé dans l'unité de fermeture (16).

15. Système de fermeture muni d'un câble en forme de spirale selon l'une des revendications 1 à 13, caractérisé en ce qu'un mécanisme de fermeture, susceptible d'être désolidarisé par actionnement d'une clé ou réglage d'un code secret de fermeture, est logé dans la contre-unité de fermeture (20).

16. Système de fermeture muni d'un câble en forme de spirale, selon l'une des revendications 1 à 15, caractérisé en ce que la pièce d'ancrage (150) et/ou la contre-unité de fermeture (150) sont montées indésolidarisables sur le cadre de bicyclette (112).

17. Système de fermeture muni d'un câble en forme de spirale selon l'une des revendications 1 à 15, caractérisé en ce que la pièce d'ancrage (18) et/ou la contre-unité de fermeture (20) sont montées sur le cadre de bicyclette (12) de façon désolidarisable, au moyen d'au moins un dispositif de fixation (28, 28b).

18. Système de fermeture muni d'un câble en forme de spirale, selon la revendication 17, caractérisé en ce que l'unité de fermeture (16) insérée dans la contre-unité de fermeture (20) recouvre en le cachant le dispositif de fixation (28, 28b).

19. Système de fermeture muni d'un câble en forme de spirale, selon la revendication 18, caractérisé en ce que le dispositif de fixation (28) destiné à la contre-unité de fermeture (20) est constitué d'un prolongement (28) d'un boulon de fermeture (28c) de la contre-unité de fermeture (20) faisant saillie au-dessus d'une cuve d'orientation (22), le cas échéant pourvu d'un point d'agrippement d'outil (28b).

20. Système de fermeture muni d'un câble en forme de spirale, selon l'une des revendications 17 à 19, caractérisé en ce que le dispositif de fixation (28) destiné à la pièce d'ancrage (18) et à la contre-unité de fermeture (20) est constitué par un boulon fileté (28), qui traverse le cadre de bicyclette (12) et serre, l'une contre l'autre, la pièce d'ancrage (18) ainsi que la contre-unité de fermeture (20) disposée à l'opposé de la pièce d'ancrage (18) sur le cadre de bicyclette (12).

21. Système de fermeture muni d'un câble en forme de spirale, selon l'une des revendications 1 à 18, caractérisé en ce que la contre-unité de fermeture et la pièce d'ancrage constituent un ensemble (150), le cas échéant un ensemble monopièce.

22. Système de fermeture muni d'un câble en forme de spirale, selon l'une des revendications 1 à 21, caractérisé en ce que la pièce d'ancrage (18) et/ou la contre-unité de fermeture (20) sont pourvues d'une sécurité de rotation (24, 26), en particulier avec une surface d'appui cylindrique visant à permettre un appui sur un tube de cadre (12).

23. Système de fermeture muni d'un câble en forme de spirale selon l'une des revendications 1 à 19, 21 et 22, caractérisé en ce qu'un oeillet fileté (352), sur lequel une pièce d'ancrage (350) et/ou une contre-unité de fermeture (320) est bloquée par vissage, est insérée dans un tube du cadre (312a).
